Europäisches Patentamt

European Patent Office

Office européen des brevets

(11) Veröffentlichungsnummer: **0 371 318**
**A1**

(12) **EUROPÄISCHE PATENTANMELDUNG**

(21) Anmeldenummer: 89121119.5

(51) Int. Cl.5: **B60B 33/00**

(22) Anmeldetag: 15.11.89

(30) Priorität: 18.11.88 DE 3839107

(43) Veröffentlichungstag der Anmeldung:
06.06.90 Patentblatt 90/23

(84) Benannte Vertragsstaaten:
BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Rewitzer, Siegfried
Am Veilchenlang 16
D-8429 Ihrlerstein(DE)

(54) Lenkrollenanordnung für ein Dreirad-Fahrzeug.

(57) Beschrieben wird eine Lenkrollenanordnung für ein gleisloses Boden-Fahrzeug (2) in Form eines sog Dreirad-Fahrzeuges. Bei diesem Fahrzeug (2) ist zusätzlich zu zwei Laufrädern (8, 10) eine Lenkrolle (12) vorgesehen, die für Kurvenfahrten und zur Erzielung eines Nachlaufs mittels eine Drehkranzes (34) um eine vertikale Achse (C) schwenkbar ist. Die Lenkrolle (12) ist relativ zu dem drehbeweglichen Teil des Drehkranzes (34) zwischen zwei entgegengesetzten Nachlaufstellungen bewegbar, so daß bei einer Fahrtrichtungsumkehr die erforderliche Änderung des Lenkrollen-Nachlaufs durch eine entsprechende Verstellung der Lenkrolle (12) erfolgt. Auf diese Weise werden unkontrollierte Ausschläge des Fahrzeuges (2) vermieden, die bei den herkömmlichen Dreirad-Fahrzeugen aufgrund der Drehung der Lenkrolle um 180°, bedingt durch den Nachlauf der Lenkrolle, auftreten. Zweckmäßigerweise ist die Lenkrolle (12) zwischen den beiden Nachlaufstellungen durch eine Linearführung (22) geradlinig verschiebbar. Die Linearführung (22) kann gleichzeitig als Pendellagerung dienen, durch die die Lenkrolle (12) zur Anpassung an Bodenunebenheiten um eine horizontale Achse (B) kippbar ist.

EP 0 371 318 A1

## Lenkrollenanordnung Für ein Dreirad-Fahrzeug

Die Erfindung betrifft eine Lenkrollenanordnung für ein gleisloses Boden-Fahrzeug nach dem Oberbegriff des Patentanspruchs 1.

Derartige Dreirad-Fahrzeuge, die insbesondere als Transportsysteme für innerbetriebliche Transportaufgaben verwendet werden, sind seit langem bekannt. Bei diesen Fahrzeugen werden häufig die verschiedenen Bewegungsmöglichkeiten und insbesondere die Lenkung durch einen unterschiedlichen Antrieb der beiden antreibbaren Laufräder (Panzersteuerung) erzielt. Zum Zwecke der Geradeausfahrt in Vor- und Rückwärtsrichtung werden beide Laufräder mit gleicher Geschwindigkeit angetrieben. Für die Kurvenfahrt in Vor- und Rückwärtsrichtung werden die beiden Laufräder mit ungleicher Geschwindigkeit angetrieben. Werden die beiden Laufräder mit gleicher Geschwindigkeit und in entgegengesetzter Drehrichtung angetrieben, so dreht sich das Fahrzeug auf der Stelle.

Die Lenkrolle, die nicht angetrieben und auch nicht direkt gesteuert bzw gelenkt wird, erlaubt hierbei die Kurvenfahrt bzw die Drehung auf der Stelle. Aufgrund des Nachlaufs der Lenkrolle treten jedoch ei einer Fahrtrichtungsumkehr Lenkprobleme auf. Da nämlich bei einem Fahrtrichtungswechsel die Lenkrolle zur Änderung des Nachlaufs um 180° geschwenkt wird, macht das Fahrzeug unkontrollierte Ausschläge, dh, das Farzeug wird um den Nachlaufradius der Lenkrolle zwangsläufig von der Spur abgelenkt (Fahrkursabweichung). Das Lenksteuerungssystem erfaßt diese Abweichung und steuert dieser Abweichbewegung des Fahrzeuges entgegen. Dadurch entstehen im Lenk- und Antriebssystem hohe Kräfte und Drehmomente, die entsprechend große Walk- und Scherxräfte und einen entsprechend großen Verschleiß an den Rädern zur Folge haben. Außerdem ist hierbei kurzzeitig eine hohe Antriebsleistung nötig, da die Lenksteuerung der Fahrkursabweichung entgegenwirkt.

Der Erfindung liegt die Aufgabe zugrunde, eine Lenkrollenanordnung der eingangs angegebenen Gattung so weiterzubilden, daß die im Stand der Technik bei Fahrtrichtungswechsel auftretenden Beanspruchungen des Antriebssystems und der Räder vermieden werden.

Diese Aufgabe wird durch die im Patentanspruch 1 gekennzeichnete Erfindung gelöst.

Bei der erfindungsgemäß ausgebildeten Lenkrollenanordnung erfolgt bei einer Fahrtrichtungsumkehr die erforderliche Änderung des Nachlaufs durch eine Verstellung der Lenkrolle relativ zu dem drehbeweglichen Teil des Drehkranzes. Da somit der Drehkranz zu einer Umkehr des Nachlaufs keine Drehbewegung ausführen muß, ist auch eine Auslenkbewegung der Lenkrolle nicht mehr gegeben, so daß die unkontrollierten Ausschläge (Fahrkursabweichungen) des Fahrzeuges vermieden sind.

Vorzugsweise ist die Lenkrolle zur Verstellung zwischen den beiden Nachlaufstellungen mittels einer Linearführung am Drehkranz geradlinig verschiebbar angebracht. Damit beim Anfahren zunächst das Fahrzeug auf der Linearführung verschiebt, ehe die Lenkrolle losrollt, ist der Reibungswiderstand der Linearführung und des Radlagers der Lenkrolle kleiner als der Reibungswiderstand zwischen der Lenkrolle und dem Boden. Eine zusätzliche Entlastung des Antriebssystems ergibt sich somit dadurch, daß die beiden Laufräder und die Lenkrolle nicht gleichzeitig, sondern nacheinander die Losbrechkraft überwinden.

Der hieraus resultierende Abbau der Leistungsspitzen im Vergleich zu herkömmlichen Fahrzeugen führt zu einem relativ geringen Energieverbrauch und damit zu einer Schonung des Antriebs.

In weiterer Ausgestaltung der Erfindung ist vorgesehen, daß die Lenkrolle mittels einer Pendellagerung zur Anpassung an Bodenunebenheiten um eine zur Radachse und zur Drehkranzachse senkrechte Achse drehbar ist. Diese Anordnung ist besonders dann von Vorteil, wenn die Lenkrolle aus einem Radpaar besteht, dessen beide Räder auf einem gemeinsamen Achsschaft drehbar gelagert sind. Durch die Pendellagerung wird hierbei vermieden, daß eines der Räder vom Boden abhebt; auch bei Bodenunebenheiten ist daher ein Bodenkontakt sämtlicher Räder sichergestellt.

Gemäß einer besonders vorteilhaften Ausgestaltung der Erfindung ist vorgesehen, daß die Linearführung gleichzeitig als Pendellagerung ausgebildet ist. Diese Lösung zeichnet sich durch konstruktive Einfachheit, geringen Platzbedarf und hoher Funktionssicherheit aus.

Die Verstellung der Lenkrolle zwischen den beiden Nachlaufstellungen kann statt durch eine lineare Verschiebung durch eine Schwenkbewegung um eine zur Drehkranzachse senkrechte und zur Radachse parallele achse erfolgen.

Die erfindungsgemäß ausgebildete Lenkrollenanordnung ist besonders geeignet für ein Boden-Fahrzeug, bei dem die beiden Laufräder - zur Lenkung des Fahrzeuges unabhängig voneinander - antreibbar sind. Statt dessen kann jedoch die Antriebskraft auch von außen (durch Ziehen oder Schieben) aufgebracht werden. Die Erfindung ist anwendbar bei Fahrzeugen mit oder ohne Fahrer, bei Fahrzeugen zum Transportieren von Lasten, bei Fahrzeugen mit Stromabnehmern oder bei anderen Boden-Fahrzeugen, bei denen eine Lenkrollenanordnung vorgesehen ist.

Anhand der Zeichnungen werden zwei Ausführungsbeispiele der Erfindung näher erläutert. Es zeigt:

Fig. 1 eine Seitenansicht eines Boden-Fahrzeuges mit einer schematisch angedeuteten Lenkrollenanordnung;

Fig. 2 eine Draufsicht von unten auf das Fahrzeug der Fig. 1;

Fig. 3 eine vergrößerte, teilweise geschnittene Seitenansicht der Lenkrollenanordnung des Fahrzeugs nach den Fig. 1 und 2;

Fig. 4 eine der Fig. 3 entsprechende, jedoch um 90°

gedrehte Ansicht der Lenkrollenanordnung;

Fig. 5,6 eine Ansicht der Lenkrollenanordnung von unten, wobei die Lenkrolle in der einen Figur ihre Nachlaufstellung für die Vorwärtsfahrt und in der anderen Figur ihre Nachlaufstellung für die Rückwärtsfahrt einnimmt;

Fig. 7,8 den Fig. 3 und 4 entsprechende Ansichten eines zweiten Ausführungsbeispiels.

Fig. 9 eine der Fig. 4 entsprechende Ansicht eines weiteren Ausführungsbeispiels.

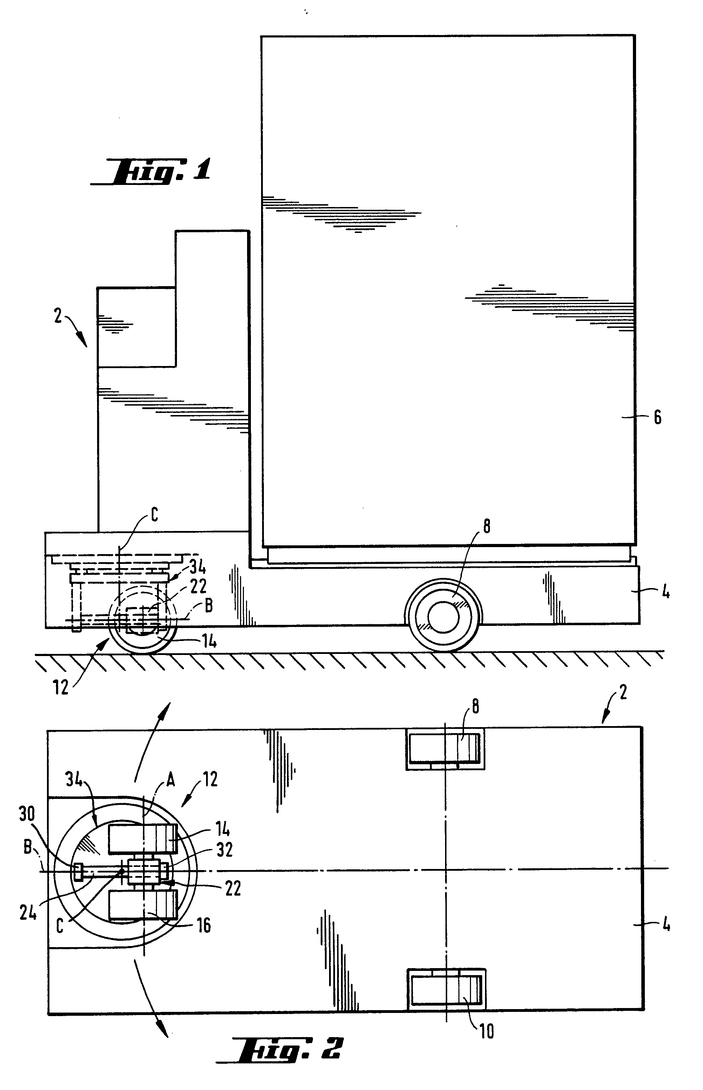

Das in den Fig. 1, 2 dargestellte fahrerlose Boden-Fahrzeug 2 mit einem Fahrzeugrahmen 4 dient zum Transport von Lasten wie der dargestellten Last 6. Es besitzt zwei Laufräder 8,10, die um in Fig. 2 strichpunktiert angedeutete, auf einer gemeinsamen Linie liegende Radachsen drehbar sind und von zwei Antriebsmotoren (nicht gezeigt) unabhängig voneinander und in beiden Drehrichtungen angetrieben werden können.

Eine antriebslose Lenkrolle 12 besteht aus zwei Rädern 14,16, deren Radachse A einen horizontalen Abstand von den Radachsen der Laufräder 8,10 hat und die bezüglich der Laufräder 8,10 so angeordnet sind, daß sich ein "Dreirad"-Fahrzeug ergibt.

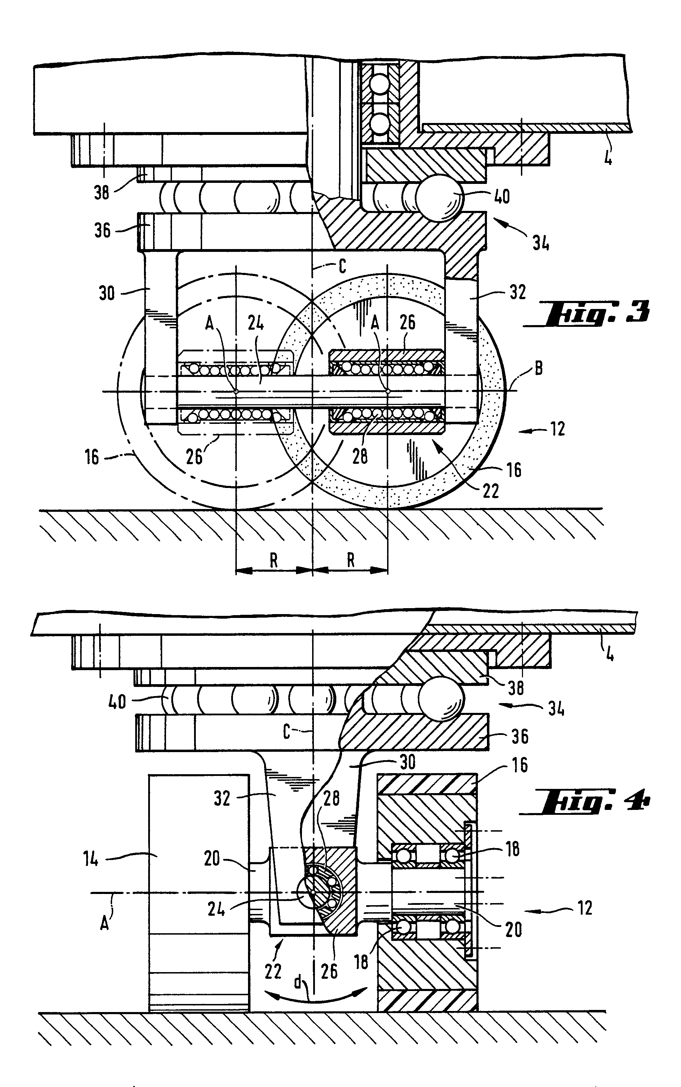

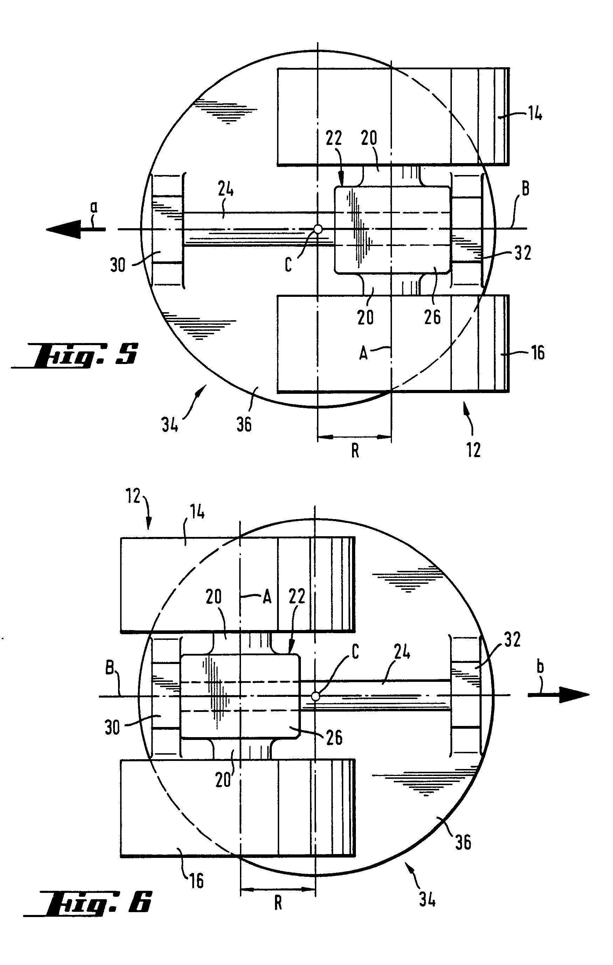

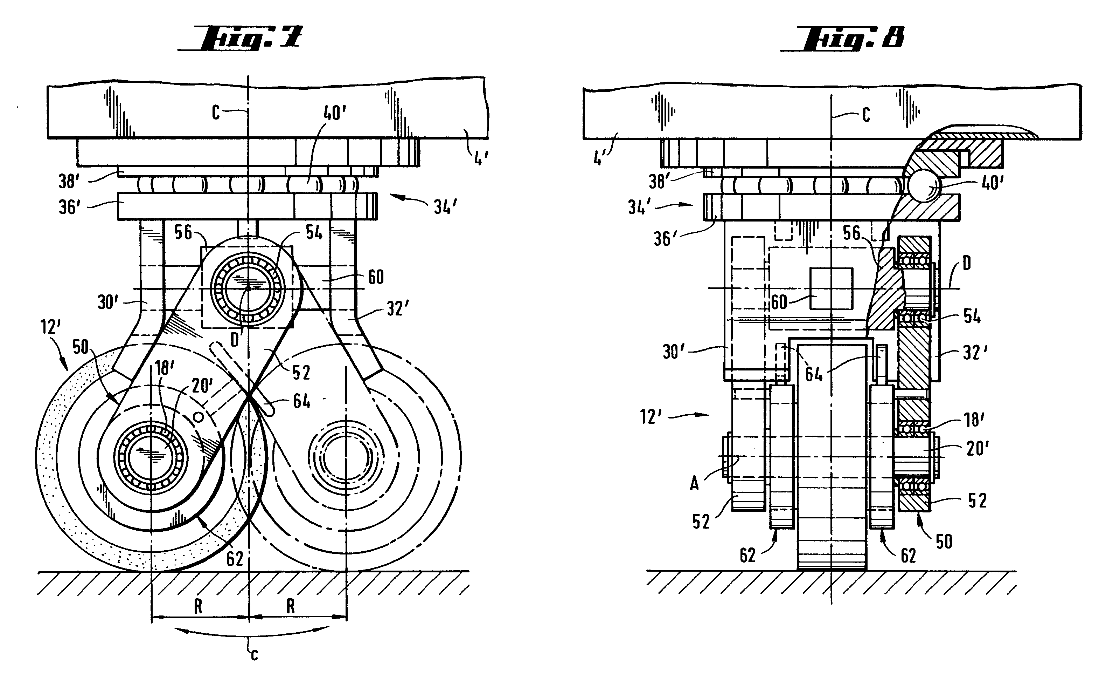

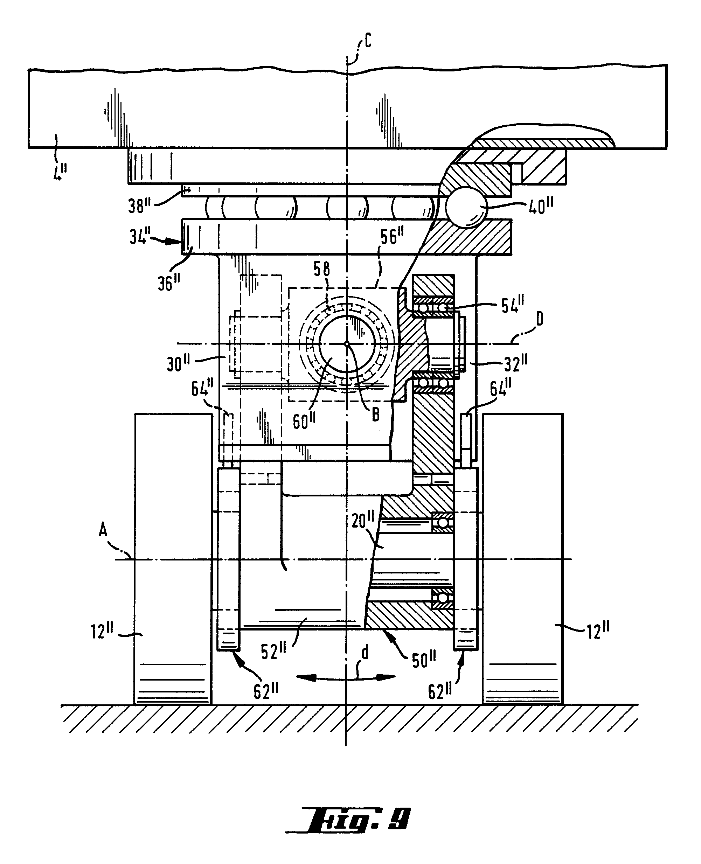

Die Räder 14,16 können von beliebiger Bauart sein und sind mittels Wälzlager 18 auf einem gemeinsamen Achsschaft 20 drehbar gelagert (vgl. Fig. 3, 4).

Der Achsschaft 20 und damit die Lenkrolle 12 sind mittels einer Linearführung 22 relativ zum Fahrzeugrahmen 4 geradlinig verschiebbar; gleichzeitig is die. Linearführung 22 als Pendellagerung ausgebildet, so daß der Achsschaft 20 und damit die beiden Räder 14,16 de Lenkrolle 12 um eine Achse B drehbar sind, die mit der Verschieberichtung der Linearführung 22 zusammenfällt und auf der Radachse A senkrecht steht.

Die Linearführung 22 weist eine Führungsstange 24 auf, auf der eine Führungsbuchse 26 mittels eines als Kugellager ausgebildeten Wälzlagers 28 axial verschiebbar und drehbar gelagert ist. Die Führungsbuchse 26 ist mit dem Achsschaft 20 einstückig ausgebildet, dh, sie bildet den Mittelteil des Achsschaftes 20, so daß die Linearführung 22, wie bereits erwähnt, sowohl eine axiale Verschiebung wie auch eine Drehbewegung des Achsschaftes 20 sowie der beiden Räder 14,16 der Lenkrolle 12 ermöglicht.

An den beiden Enden der Führungsstange 24 sind zwei vertikale Arme 30,32 angebracht, die über einen Drehkranz 34 die Führungsstange 24 mit dem Fahrzeugrahmen 4 verbinden. Die Arme 30,32 dienen gleichzeitig als Anschläge für die lineare Verschiebung der Führungsbuchse 26, wie noch genauer erläutert wird.

Statt der dargestellten Anordnung könnte der Achsschaft 20 (über die Führungsbuchse 26) mit der Führungsstange 24 fest verbunden sein. In diesem Fall wäre dann die entsprechend verlängerte Führungsstange 24 in den Armen 30,32 axial verschiebbar sowie drehbar gelagert.

Der Drehkranz 34 besitzt zwei Drehteller 36,38, die über Kugeln 40 relativ zueinander drehbar sind und von denen der Drehteller 38 am Fahrzeugrahmen 4 angebracht ist, während der andere Drehteller 36 mit den Armen 30,32 fest verbunden ist.

Der Drehkranz 34 ermöglicht eine Drehung der Lenkrolle 12 um eine vertikale Achse C, so daß die nicht direkt gelenkte bzw gesteuerte Lenkrolle 12 bei Kurvenfahrten des Fahrzeuges eine entsprechende Schragstellung bezüglich der Laufräder 8,10 einnehmen kann. Der Drehkranz 34 ermöglicht ferner einen Nachlauf der Lenkrolle 12, da die vertikale Achse C einen horizontalen Abstand entsprechend dem Nachlaufradius R von der Radachse A der Lenkrolle 12 hat, wenn die Lenkrolle 12 eine ihrer beiden Anschlagstellungen einnimmt (vgl. Fig. 3).

Im Betrieb wird das Fahrzeug 2 durch Steuerung der beiden Laufräder 14,16 gelenkt. Bei Kurvenfahrten werden die beiden Laufräder 14,16 mit unterschiedlicher Geschwindigkeit angetrieben; die Lenkrolle 12, die einen Nachlauf entsprechend dem Nachlaufradius R hat, folgt hierbei -aufgrund ihrer Schwenklagerung um die Drehkranzachse C -der sich hierbei ergebenden Kurvenbahn. Werden die beiden Laufräder 14,16 mit der gleichen Geschwindigkeit, jedoch in entgegengesetzten Drehrichtungen angetrieben, so dreht sich das Fahrzeug 2 auf der Stelle.

Zur Erläuterung einer Fahrtrichtungsumehr sei angenommen, daß sich das Fahrzeug 2 zunächst in Vorwärtsrichtung bewegt hat. Die Vorwärtsrichtung ist in Fig. 5 durch einen Pfeil a angedeutet. Bei der Vorwärtsfahrt hat sich die Führungsbuchse 26 an den als Anschlag dienenden Arm 32 angelegt. Die beiden Räder 14,16 der Lenkrolle 12 nehmen somit eine ihrer beiden Nachlaufstellungen ein, in denen ihre Radachse A um den Nachlaufradius R von der vertikalen Drehkranzachse C entfernt ist (vgl. auch Fig.3).

Werden nun die Laufräder 8,10 in der entgegengesetzten Richtung gedreht, so bewegt sich das Fahrzeug 2 nach rechts in Fig. 5 bzw in Richtung des Pfeils b in Fig. 6. Hierbei bleiben die beiden Räder 14,16 der Lenkrolle 12 zunächst stehen. Dies rührt daher, daß der Reibungswiderstand der Linearführung 22 und der Radlager 18 keiner ist als der Reibungswiderstand zwischen den Rädern 14,16 und dem Boden. Diese Beziehung zwischen den Reibungswiderständen läßt sich sowohl rechnerisch wie auch experimentell ermitteln.

Während somit das Fahrzeug sich in Rückwärtsrichtung (in Richtung des Pfeils b) bewegt und die Räder 14,16 der Lenkrolle 12 stillstehen, gleitet die Führungsbuchse 26 auf der Führungsstange 24, bis sich die Führungsbuchse 26 an den (in den Fig. 5, 6 linksseitigen) Arm 30 anlegt. Die Räder 14,16 haben nun ihre neue Nachlaufstellung eingenommen, in der ihre Radachse A wieder um den Nachlaufradius R von der Drehkranzachse C beabstandet ist. Die Räder 14,16 der Lenkrolle 12 beginnen nun ebenfalls loszurollen, zu einem Zeitpunkt also, in dem die beiden Laufräder 8,10 bereits in Bewegung sind.

Da die Linearführung 22 gleichzeitig als Pendellagerung ausgebildet ist, können sich die beide-' Räder 14,16 der Lenkrolle 12 während der Bewegung des Fahrzeuges an Bodenunebenheiten anpassen. Auf diese Weise ist eine dauernder Bodenkontakt sämtlicher Räder sichergestellt.

Für die Führungsbuchse 26 der Linearführung 22 könnte in den beiden Endstellungen (Nachlaufstellungen) eine Arretierung (nicht gezeigt) vorgesehen werden, die mechanisch, elektromechanisch, hydraulisch od.dgl. ausgebildet sein kann.

Die Lenkrolle 12 könnte statt mit zwei Rädern auch nur mit einem Rad gebaut werden. Allerdings könnte dies zu Instabilitäten des Fahrzeugs führen, wenn das Rad der Lenkrolle nicht breit genug sein kann.

Bei dem in den Fig. 7 und 8 gezeigten zweiten Ausführungsbeispiel wurden für Bauteile, die dem vorhergehenden Ausführungsbeispiel entsprechen, die gleichen, jedoch mit einem Apostroph versehenen Bezugszeichen verwendet.

Der Hauptunterschied des Ausführungsbeispiels der Fig. 7,8 gegenüber dem vorhergehenden Ausführungsbeispiel besteht darin, daß die Lenkrolle 12' nicht durch eine geradlinige Verschiebung, sondern durch eine Schwenkbewegung um eine zur Radachse A parallele Achse D zwischen ihren beiden Nachlaufstellungen verstellbar ist. Zu diesem Zweck ist eine Hebelanordnung 50 mit zwei Hebeln 52 vorgesehen, in deren einen Enden die aus nur einem Rad bestehende Lenkrolle 12' über die Radlager 18' drehbar gelagert ist, während die anderen Enden der Hebel 52 über Wälzlager 54 an einem Lagerkörper 56 um die Achse D drehbar aufgehängt sind.

Der Lagerkörper 56 ist an der Querstange 60 fixiert, die ihrerseits an den beiden Armen 30', 32' befestigt ist, die von dem drehbeweglichen Teil 36' des Drehkranzes 34' nach unten abgehen. Die beiden Arme 30', 32' dienen mit ihren schräg verlaufenden freien Enden gleichzeitig als Anschläge für die Hebel 52 und somit als Begrenzung für die Verstellbewegung der Lenkrolle 12' zwischen den beiden Nachlaufstellungen.

Der Lenkrolle 12' ist auf ihren beiden axialen Seiten eine Einwegbremse 62 zugeordnet, die mittels eines Schalthebels 64 drehrichtungsumkehrbar ist. Auf diese Weise läßt sich die Einwegbremse 62 so umsteuern, daß sie die Lenkrolle 12' jeweils entgegen der Nachlaufrichtung blockiert.

Die Umstellung der Lenkrolle 12' zwischen ihren beiden Nachlaufstellungen erfolgt durch eine Drehbewegung der Hebelanordnung 50 um die Achse D (vgl. den Doppelpfeil c in Fig. 7). Wie bereits erwähnt, dienen hierbei die schräg verlaufenden freien Enden der Arme 30', 32' als Begrenzungsanschläge. Zur Umkehr der Nachlaufstellung ist die Einwegbremse 62 durch den Umschalthebel 64 von ihrer einen Wirkungsdrehrichtung in ihre andere Wirkungsdrehrichtung umzuschalten.

Das in den Fig. 7 und 8 gezeigte Ausführungsbeispiel hat den Vorteil, daß die Lenkrolle in ihren beiden Nachlaufstellungen stabil ist. Allerdings verlangt das Ausführungsbeispiel der Fig. 7, 8 einen etwas größeren baulichen Aufwand; außerdem muß das Fahrzeug während der Umschaltung von der einen in die andere Nachlaufstellung geringfügig angehoben werden.

Bei dem in der Fig. 9 gezeigten Variante der Ausführungsform der Fig. 7 und 8 wurden für Bauteile, die dem vorhergehenden Ausführungsbeispielen entsprechen, die gleichen, jedoch mit zwei Apostrophen versehenen Bezugszeichen verwendet.

Der Hauptunterschied des Ausführungsbeispiels der Fig. 9 gegenüber dem vorhergehenden Ausführungsbeispiel besteht darin, daß hier nur ein Hebel 52" vorhanden ist, auf dessen Achse 20" symmetrisch rechts und links des Hebels zwei Räder 12" angebracht sind, und daß der Lagerkörper 56" mittels einer Pendellagerung 58, di ebenfalls als Wälzlager ausgebildet ist, um die Achse B auf der Querstange 60" drehbar gelagert ist.

Die übrigen Bauelemente und Funktionen entsprechen denen der Bauform der Fig. 7 und 8.

Aufgrund der Pendellagerung 58 ist das Lenkrollenpaar 12" um die Achse B drehbar (vgl. den Doppelpfeil d in Fig. 9), so daß es sich an Unebenheiten des Bodens anpassen kann.

## Ansprüche

1. Lenkrollenanordnung für ein gleisloses Boden-Fahrzeug mit zwei Laufrädern, die um auf einer gemeinsamen Linie liegende Achsen unabhängig voneinander drehbar und bezüglich des Fahrzeugrahmens fest angeordnet sind, und einer auf dem Boden laufenden Lenkrolle, die um eine zu den Achsen der Laufräder beabstandete Radachse frei drehbar und an dem drehbeweglichen Teil eines Drehkranzes angebracht ist, dessen Achse vertikal verläuft und zur Erzielung eines Nachlaufs der Lenkrolle einen dem Nachlaufradius entsprechenden horizontalen Abstand von der Radachse der Lenkrolle hat, dadurch gekennzeichnet, daß die Lenxrolle (12) relativ zu dem drehbeweglichen Teil (36) des Drehkranzes (34) über eine dem doppelten Nachlaufradius (R) entsprechende Strecke zwischen zwei entgegengesetzten Nachlaufstellungen bewegbar ist, so daß bei einer Fahrtrichtungsumkehr die erforderliche Änderung des Lenkrollen-Nachlaufs durch eine entsprechende Verstellung der Lenkrolle (12) relativ zu dem drehbeweglichen Teil (36) des Drehkranzes (34) erfolgt.

2. Lenkrollenanordnung nach Anspruch 1, dadurch gekennzeichnet, daß die Lenkrolle (12) mittels einer Pendellagerung (22;58) zur Anpassung an Bodenunebenheiten um eine zur Radachse (A) und zur Drehkranzachse (C) senkrechte Achse (B) drehbar ist.

3. Lenkrollenanordnung nach Anspruch 1 oder 2, dadurch gekennzeichnet, daß die Lenkrolle (12) zur Verstellung zwischen den beiden Nachlaufstellungen mittels einer Linearführung (22) am Drehkranz (34) geradlinig verschiebbar angebracht ist.

4. Lenkrollenanordnung nach Anspruch 3, dadurch gekenn zeichnet, daß der Reibungswiderstand der Linearführung (22) und des Radlagers (18) der Lenkrolle (12) kleiner ist als der Reibungswiderstand zwischen der Lenkrolle (12) und dem Boden.

5. Lenkrollenanordnung nach Anspruch 3 oder 4, dadurch gekennzeichnet, daß die Linearführung (22) gleichzeitig als Pendellagerung ausgebildet ist.

6. Lenkrollenanordnung nach Anspruch 5 dadurch gekennzeichnet, daß die Linearführung (22) eine senkrecht zur Radachse (A) verlaufende Führungsstange (24) aufweist, die zum axialen Verschieben und pendelnden Lagern der Lenkrolle (12) dient.

7. Lenkrollenanordnung nach Anspruch 6, dadurch gekennzeichnet, daß die Führungsstange (24) an den unteren Enden zweier am Drehkranz angebrachter vertikaler Arme (30,32) aufgehängt ist, die gleichzeitig als Anschläge für die lineare Verschiebung der Lenkrolle (12) dienen.

8. Lenkrollenanordnung nach Anspruch 7, dadurch gekennzeichnet, daß der Achsschaft (20) der Lenkrolle (12) mit einer Führungsbuchse (26) verbunden ist, die auf der fest angeordneten Führungsstange (24) axial verschiebbar und drehbar gelagert ist.

9. Lenkrollenanordnung nach Anspruch 1 oder 2, dadurch gekennzeichnet, daß die Lenkrolle (12′, 12″) zur Verstellung zwischen den beiden Nachlaufstellungen am Drehkranz (34′, 34″) um eine zur Drehkranzachse (C) senkrechte und zur Radachse (A) parallele Achse (D) schwenkbar angebracht ist.

10. Lenkrollenanordnung nach Anspruch 9, dadurch gekenn zeichnet, daß die Lenkrolle (12′, 12″) mittels einer Hebelanordnung (50, 50′) am Drehkranz (34′, 34″) schwenkbar angebracht ist.

11. Lenkrollenanordnung nach Anspruch 9 oder 10, dadurch gekennzeichnet, daß die Lenkrolle (12′, 12″) durch eine richtungsumschaltbare Einwegbremse (62, 62″) in beiden Nachlaufstellungen in jeweils einer Drehrichtung blockierbar ist.

12. Lenkrollenanordnung nach einem oder mehreren der vorhergehenden Ansprüche, dadurch gekennzeichnet, daß die beiden Nachlaufstellungen der Lenkrolle (12) durch eine Arretierung jeweils festlegbar sind.

13. Lenkrollenanordnung nach einem oder mehreren der vorhergehenden Ansprüche, dadurch gekennzeichnet, daß die Lenkrolle (12) aus einem Radpaar besteht, dessen beide Räder (14,16) auf einem gemeinsamen Achsschaft (20) drehbar gelagert sind.

Fig. 1

Fig. 2

Fig. 3

Fig. 4

**Fig. 5**

**Fig. 6**

**Fig. 7**

**Fig. 8**

EP 0 371 318 A1

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-E- 84 084 (ERNST WAGNER) <br> * Seite 1, rechte Spalte, Zeile 6 - Spalte 2, linke Spalte, Zeile 6; Figuren 1,2 * <br> --- | 1,2,3,5,6,7,8,13 | B 60 B 33/00 |
| X | FR-A-1 339 832 (ERNST WAGNER) <br> * Seite 1, linke Spalte, Zeilen 1-8; Seite 1, rechte Spalte, Zeile 35 - Seite 2, linke Spalte, Zeile 13; Figur 2 * <br> --- | 1,3,7,8 | |
| A | GB-A-2 170 400 (NISSAN) <br> * Seite 1, Zeilen 109-111; Seite 2, Zeilen 54-76; Seite 3, Zeilen 1-32; Figuren 1-5 * <br> --- | 1 | |
| A | GB-A- 603 936 (GROSSMAN) <br> * Seite 2, Zeile 19 - Seite 3, Zeile 21; Figuren 1-6 * <br> --- | 1,3 | |
| A | GB-A- 693 320 (SMITH) <br> * Seite 2, Zeilen 59-94; Figur 3 * <br> --- | 1,10 | **RECHERCHIERTE SACHGEBIETE (Int. Cl.5)** |
| A | PATENT ABSTRACTS OF JAPAN, Band 6, Nr. 130 (M-143)[1008], 16. Juli 1982; & JP-A-57 55 201 (SUEHIRO) <br> * Zusammenfassung; Figur * <br> ----- | 1,4 | . B 60 B |

Der vorliegende Recherchenbericht wurde für alle Patentansprüche erstellt

| Recherchenort | Abschlußdatum der Recherche | Prüfer |
|---|---|---|
| DEN HAAG | 21-02-1990 | AYITER I. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes Dokument